(19) **Europäisches Patentamt**

**European Patent Office**

**Office européen des brevets**

(11) Veröffentlichungsnummer: **0 023 360**
**B1**

(12) **EUROPÄISCHE PATENTSCHRIFT**

(45) Veröffentlichungstag der Patentschrift:
**12.05.82**

(21) Anmeldenummer: **80104476.9**

(22) Anmeldetag: **29.07.80**

(51) Int. Cl.³: **C 09 J 3/14**

(54) **Fussbodenbelagskleber, Verfahren zu seiner Herstellung und Verwendung.**

(30) Priorität: **31.07.79 DE 2931127**

(43) Veröffentlichungstag der Anmeldung:
**04.02.81 Patentblatt 81/5**

(45) Bekanntmachung des Hinweises auf die Patenterteilung:
**12.05.82 Patentblatt 82/19**

(84) Benannte Vertragsstaaten:
**AT BE CH DE FR GB IT LI NL SE**

(56) Entgegenhaltungen:
**keine**

(73) Patentinhaber: **WACKER-CHEMIE GMBH,**
**Prinzregentenstrasse 22, D-8000 München 22 (DE)**

(72) Erfinder: **Merz, Ekkehard, Dr. Dipl.-Chem.,**
**Robert-Koch-Strasse 15 b, D-8263 Burghausen (DE)**
Erfinder: **Kothe, Gerhard, Franz-Alexander-Strasse 5,**
**D-8263 Burghausen (DE)**

Fußbodenbelagskleber, Verfahren zu seiner Herstellung und Verwendung

Die Erfindung betrifft einen Fußbodenbelagskleber auf Grundlage einer wäßrigen Dispersion zum Verlegen von Fußbodenbelägen mit Rückseiten aus textilartigen Materialien oder geschäumten Kunststoffen.

Bisher werden für derartige Beläge überwiegend Klebstoffe verwendet, die aus Balsamharz in Kombination mit Polyvinyläther in methanolischer Lösung bestehen. Sie enthalten üblicherweise große Mengen Füllstoff, insbesondere Calciumcarbonatmehl. Dieser Klebstofftyp wird im allgemeinen als »heller Kunstharzklebstoff« bezeichnet. Seine charakteristischen Eigenschaften sind:

a) Lange offene Zeit,
b) gute Naßklebrigkeit, d. h., ein unbeabsichtigtes Lösen des Belages vom Untergrund, auch unmittelbar nach dem Verlegen, unterbleibt,
c) gute Verklebungsfestigkeit,
d) gute Wasserfestigkeit,
e) Möglichkeit, in gewissem Umfang während des Verlegens Korrekturen vorzunehmen, ein Maß hierfür kann darin gesehen werden, daß der Klebstoff während des Abbindens Fäden zieht.

Dieses Eigenschaftsbild zeigt auch der erfindungsgemäße Fußbodenbelagskleber.

Er zeichnet sich aber darüber hinaus gegenüber dem »hellen Kunstharzkleber« aus, durch Vermeidung der

f) Feuergefährlichkeit aufgrund dessen methanolischer Lösung und
g) physiologischen Bedenklichkeit aufgrund dessen Methanolgehaltes, der für den Verarbeiter besondere Arbeitsplatzschutzmaßnahmen erforderlich macht (der helle Kunstharzkleber ist im Gegensatz zum erfindungsgemäßen Fußbodenbelagskleber kennzeichnungspflichtig).

Gegenstand der Erfindung ist also ein Fußbodenbelagskleber, enthaltend

a) 100 Gew.-Teile einer wäßrigen Polymerdispersion mit Feststoffgehalten von 30—70 Gew.-% des Gesamtgewichtes der Dispersion, wobei der Feststoff aus Kunstharzteilchen verschiedener Größen besteht, wobei die Mehrzahl der größeren Teilchen mindestens doppelt so groß ist wie die Mehrzahl der kleineren Teilchen und wobei die Mehrzahl der größeren Teilchen eine Größe von 0,5 bis 3 $\mu$m und der größere Teil der kleineren Teilchen eine Größe von 0,1 bis 1 $\mu$m besitzt,

b) 30 bis 120 Gewichtsteile einer Weichmacher/Weichharz-Mischung, wobei auf einen Gewichtsteil Weichmacher 1 bis 20 Gewichtsteile Weichharz entfallen.

Der erfindungsgemäße Kleber eignet sich insbesondere zur Verwendung beim Verlegen von Bodenbelägen aus textilartigen Materialien oder geschäumten Materialien, vorzugsweise aus geschäumtem PVC und aus geschäumtem Natur- oder Synthesegummi.

Der erfindungsgemäße Fußbodenbelagskleber wird durch Mischen der unter a) charakterisierten Dispersion mit der unter b) beschriebenen Weichmacher/Weichharz-Mischung im angegebenen Gewichtsverhältnis von 1 : 0,3 bis 1 : 1,2 in einem Dissolver oder einem anderen geeigneten Mischgerät hergestellt.

Als wäßrige Polymerdispersion a, die nach Kombination mit der Weichmacher/Weichharz-Mischung b den sich ausgezeichnet für die Verwendung als Fußbodenbelagskleber eignenden erfindungsgemäßen Dispersionskleber ergibt, kommen insbesondere solche in Frage, die eine Mindestfilmbildungstemperatur zwischen 0 und 20° C und eine bimodale Teilchengrößenverteilung besitzen.

Solche Kunstharzdispersionen mit bimodaler Teilchengrößenverteilung besitzen im Unterschied zur allgemein üblichen Teilchengrößenverteilung mit einem Teilchengrößenbereich, in dem die Mehrzahl der Feststoffteilchen liegt (sog. Gaußverteilung), mindestens und meistens zwei Bereiche, in denen die Teilchengrößen hauptsächlich liegen und die getrennt sind von mindestens einem Bereich, in dem die Anzahl der Teilchen mit entsprechender Größe ein relatives Minimum, bezogen auf die Gesamtzahl der Teilchen durchläuft.

Ein relatives Maximum der Zahl der Teilchen in der Polymerdispersion a) liegt bei Teilchen mit einer Größe von 0,1 bis 1$\mu$m, ein zweites bei Teilchen mit einer Größe von 0,5 bis 3 $\mu$m. Hierbei soll in für die Verwendung in den erfindungsgemäßen Klebern geeigneten Polymerdispersionen das relative Maximum der größeren Teilchen bei einer Teilchengröße liegen, die mindestens den doppelten Wert, verglichen zur Teilchengröße des anderen relativen Maximums besitzt.

Vorzugsweise besteht der Feststoff der Dispersion a) zu 50 bis 80 Gew.-%, insbesondere 60 bis 75 Gew.-%, bezogen auf das Gesamtgewicht des Feststoffes in der Dispersion a), aus den größeren Kunstharzteilchen und entsprechend zu 20 bis 50 Gew.-%, insbesondere 25 bis 40 Gew.-%, aus den kleineren Kunstharzteilchen.

Als Kunstharzdispersionen können im erfindungsgemäßen Kleber alle für die Verwendung in herkömmlichen Dispersionsklebstoffen geeigneten Polymerdispersionen eingesetzt werden. Zum Beispiel kommen hierfür Homo- oder vorzugsweise Copolymere von Vinylestern gesättigter $C_2$- bis $C_{18}$-Carbonsäuren, insbesondere Vinylacetat, Vinylpropionat, Vinyllaurat, von Olefinen, insbesondere Äthylen, Butadien und Styrol, und von $C_1$- bis $C_8$-Alkylestern von ungesättigten Mono- und Dicarbonsäuren, insbesondere Methyl-, Äthyl-, Propyl-, Butyl-, Äthylhexylacrylaten und -maleinaten in Frage. Bevorzugt von diesen Monomeren werden die Vinylester, Äthylen, die Acrylate, die Maleinate und Butadien. Am meisten werden die Copolymerdispersionen aus Äthylen-Vinylacetat- und Vinylacetat-Vinyllaurat-Copolymerisaten bevorzugt.

Bimodale Polymerdispersionen können hergestellt werden z. B. nach U. Türck, Angew. Makromolekulare Chemie 46 (1975) 109—133 oder nach H. G. Keppler et al. ibid. 2 (1968) 1—25.

Bevorzugt werden die bimodalen Polymerdispersionen allerdings hergestellt durch Mischen von zwei in bekannter Weise hergestellten Dispersionen unterschiedlicher Teilchengröße. Hierbei können dann auch Polymerdispersionen hergestellt werden aus Polymerisaten unterschiedlicher Glasübergangstemperatur, z. B. solchen mit $T_g$ von −20 bis 0°C und solchen mit $T_g$ von 0 bis +20°C, vorzugsweise 0 bis +10°C. Die Polymerdispersion aus den gröberen Polymerisatteilchen kann das Polymerisat mit dem höheren $T_g$-Wert enthalten, vorzugsweise enthält sie jedoch das Polymerisat mit dem niedrigeren $T_g$-Wert.

Überraschenderweise läßt sich durch eine solche Wahl von Dispersionen mit Polymerisaten verschiedener Glasübergangstemperaturen vielfach eine Steigerung der Kohäsion des Dispersionsfilms bzw. des Klebstoffilms erreichen.

Die zur Herstellung des erfindungsgemäßen Fußbodenbelagsklebers verwendete Komponente b ist eine Weichmacher/Weichharz-Mischung aus mindestens einem, vorzugsweise jedoch zwei Weichharzen in Kombination mit einem, dem Fachmann geläufigen Monomerweichmacher, z. B. Phthalat-, Sebacinat-, Adipinat- oder Phosphat-Weichmacher. Beispiele hierfür sind die Diester der Phthalsäure, der Sebacinsäure und der Adipinsäure mit Butanol, Octanol, Nonanol, Isodecanol, die Ester, insbesondere die tertiären Ester der Phosphorsäure mit den bereits genannten Alkanolen, weiterhin aber auch mit aromatischen Hydroxyverbindungen wie Phenol, Kresol und Hydroxyxylol.

Unter Weichharz werden hier Harze verstanden, deren Viskosität bei 20°C bei 5 bis 50 Pas, vorzugsweise bei 10 bis 25 Pas, liegt und deren Erweichungspunkt nach Kraemer-Sarnow (vgl. Deutsche Industrienorm DIN 1995) zwischen 0 und 15°C liegt. Solche Harze sind zum Beispiel: Kolophoniumtriäthylenglykolester wie Rokrasinester® D 115, Granolite®150, Staybelite-Ester®3, Kolophoniumdiäthylenglycolester wie Dertoline® DEG, Polyterpenharze wie Dercolyte® A 10 und S 10, mit Polyätheralkoholen veresterte Naturharzsäuren wie Weichharz KTN®, flüssige Cumaron-Indenharze wie Cumaron-Indenharz B 1/flüssig, Necirès® RF 10.

Die als Komponente b eingesetzte Weichmacher/Weichharz-Mischung wird in Mengen von 30 bis 120, vorzugsweise 50 bis 100, Gewichtsteilen je 100 Gewichtsteile der wäßrigen Kunstharzdispersion eingesetzt. Die Weichmacher/Weichharz-Mischung, die im allgemeinen je Gewichtsteil Weichmacher 1 bis 20 Gewichtsteile Weichharz enthält, besitzt im allgemeinen eine Viskosität von vorzugsweise 500—10 000 mPas, insbesondere 800—7000 mPas.

Von der Weichmacher/Weichharz-Mischung können bis zu etwa 35 Gew.-% durch Hartharze ersetzt sein. Unter Hartharz werden hier Harze mit Erweichungspunkten nach Kraemer-Sarnow von 60 bis 150°C und mit Schmelzpunkten oberhalb 60°C (Kapillarmethode nach Deutsche Industrienorm DIN 53 181) verstanden.

Solche Harze sind beispielsweise: Terpenphenolharze wie Alresen® PT 214, polymerisierte Wurzel- und Balsamharze wie Neutrex® WW, Tallharze wie Polros® A, Kohlenwasserstoffharze wie Escorez®1101, 3102, Hercurez® A 80, AR 115, A 150, polymerisierte Kohlenwasserstoffharze wie Necirès®ALX-100, Cumaron-Indenharze wie z. B. Cumaron-Indenharz B 1-75-TN und B 1-85-TN, Necirès® RF 75 und RF 85.

Es ist auch möglich, geringe Mengen organischer Lösungsmittel (etwa bis 20 Gew.-%), vorzugsweise Toluol, in die Weichmacher/Weichharz-Mischung einzuarbeiten.

Die Mischung aus Weichmacher und Harzen sowie gegebenenfalls Lösungsmittel wird im allgemeinen in Rührern oder Knetern hergestellt.

Zur Steuerung der Klebestärke und des weiteren physikalischen Verhaltens können in dem erfindungsgemäßen Klebstoff weitere übliche Zusätze bis zu etwa 60 Gew.-%, bezogen auf das Gesamtgewicht des Klebers, eingearbeitet werden: z. B. Calciumcarbonate, Quarzmehle, Leichtspat, Kaolin sowie Silikate jeweils unterschiedlicher Körnung oder Gemische dieser Substanz.

Die folgenden Beispiele dienen der weiteren Erläuterung der Erfindung.

Beispiel 1

Als Komponente a wurde eine wäßrige Äthylen-/Vinylacetat-Copolymerdispersion mit bimodaler Teilchengrößenverteilung, einem Festgehalt von 53 Gew.-% und einer Viskosität von 1700 mPas (Epprecht-Rheometer STV C 3) verwendet. Die Teilchengröße der Polymerpartikel mit dem geringeren Teilchendurchmesser lag hauptsächlich zwischen 0,1 und 0,5 μm, insbesondere bei ca. 0,4 μm. Die Teilchengröße der Polymerpartikel mit dem größeren Teilchendurchmesser lag hauptsächlich zwischen 0,5 und 3 μm, insbesondere jedoch bei ca. 1 μm. Die Glasübergangstemperatur $T_g$ der gröberen Teil-

chen betrug ungefähr −5°C, die der feineren ca. +1°C.

Die Weichmacher/Weichharz-Mischung besaß folgende Zusammensetzung:

| | |
|---|---|
| Kolophoniumtriäthylenglycolester | 40 Gew.-Teile |
| Cumaron-Indenharz B 1-75-TN | 20 Gew.-Teile |
| Cumaron-Indenharz B 1 flüssig | 20 Gew.-Teile |
| Dibutylphthalat | 10 Gew.-Teile |
| Toluol | 10 Gew.-Teile |

Die Copolymerdispersion wurde mit der Weichmacher/Weichharz-Mischung im Verhältnis 1 : 0,75 in einem Schnellrührer vermischt. Anschließend wurden 30 Gew.-%, bezogen auf das Gesamtgewicht, an Quarzmehl einer Teilchengröße unter 100 µm und ein handelsübliches Konservierungsmittel eingearbeitet.

Der anwendungsbereite Kleber enthielt

| | |
|---|---|
| 40 Gew.-Teile | Dispersion |
| 30 Gew.-Teile | Harzlösung |
| 30 Gew.-Teile | Quarzmehl |
| 0,1 Gew.-Teile | Konservierungsmittel |

### Beispiel 2

Beispiel 1 wurde wiederholt mit der Abänderung, daß die Weichmacher/Weichharz-Mischung folgende Zusammensetzung aufwies:

| | |
|---|---|
| Kolophoniumtriäthylenglycolester | 11,25 Gew.-Teile |
| Cumaron-Indenharz B 1/flüssig | 15,0 Gew.-Teile |
| Di-isodecylphthalat | 3,75 Gew.-Teile |

### Beispiel 3

Beispiel 1 wurde wiederholt mit der Abänderung, daß die Weichmacher/Weichharz-Mischung folgende Zusammensetzung aufwies:

| | |
|---|---|
| Kolophoniumtriäthylenglycolester | 24 Gew.-Teile |
| Weichharz KTN | 10 Gew.-Teile |
| Alresen® PT 214 | 41 Gew.-Teile |
| Dibutylphthalat | 10 Gew.-Teile |
| Toluol | 15 Gew.-Teile |

### Beispiel 4

Beispiel 1 wurde wiederholt mit der Abänderung, daß als Copolymerdispersion eine Vinylacetat-Vinyllaurat-Copolymerdispersion mit einem Festgehalt von 50 Gew.-%, mit einer hauptsächlichen Teilchengröße der größeren Teilchen zwischen 1 und 2 µm, die hauptsächliche Teilchengröße der kleineren Teilchen bei 0,1 µm. Die größeren Teilchen machen 70 Gew.-% des Festharzes der Dispersion aus, die Menge der kleineren Teilchen beträgt 30 Gew.-% des Festharzes der Dispersion.

## Patentansprüche

1. Fußbodenbelagskleber enthaltend

a) 100 Gewichtsteile einer wäßrigen Polymerdispersion mit Feststoffgehalten von 30 bis 70 Gew.-% des Gesamtgewichts der Dispersion, wobei der Feststoff aus Kunstharzteilchen verschiedener Größen besteht, wobei die Mehrzahl der größeren Teilchen mindestens doppelt so groß ist wie die Mehrzahl der kleineren Teilchen und wobei die Mehrzahl der größeren Teilchen eine Größe von 0,5 bis 3 µm und die Mehrzahl der kleineren Teilchen eine Größe von 0,1 bis 1 µm besitzt,

b) 30 bis 120 Gewichtsteile einer Weichmacher/Weichharz-Mischung, wobei auf einen Gewichtsteil Weichmacher 1 bis 20 Gewichtsteile Weichharz entfallen.

2. Fußbodenbelagskleber nach Anspruch 1, dadurch gekennzeichnet, daß in der wäßrigen Kunststoffdispersion

a) der Teil mit den größeren Polymerteilchen 50 bis 80 Gew.-%, bezogen auf das Gesamtgewicht des Feststoffes in der Dispersion, ausmacht.

3. Fußbodenbelagskleber nach Anspruch 1 oder 2, dadurch gekennzeichnet, daß 0 bis 20 Gew.-% der Weichmacher/Weichharz-Mischung durch organische Lösungsmittel ersetzt sind.

4. Fußbodenbelagskleber nach einem der Ansprüche 1 bis 3, dadurch gekennzeichnet, daß 0 bis 41 Gew.-% der Weichmacher/Weichharz-Mischung durch Hartharz ersetzt sind.

5. Fußbodenbelagskleber nach Anspruch 4 dadurch gekennzeichnet, daß 0 bis 35 Gew.-% der Weichmacher/Weichharz-Mischung durch Hartharz ersetzt sind.

6. Verfahren zur Herstellung des Fußbodenbelagsklebers nach Anspruch 1, dadurch gekennzeichnet, daß die Polymerdispersion a mit der Weichmacher/Weichharz-Mischung b, Gewichtsverhältnis von 1 : 0,3 bis 1 : 12, in einem Mischgerät gemischt wird.

7. Verwendung des Klebers nach Anspruch 1 zum Verlegen von Bodenbelägen aus textilartigen oder geschäumten Materialien.

## Claims

1. Adhesive for floor coverings containing

(a) 100 parts by weight of an aqueous polymer dispersion having a solids content of from 30 to 70% by weight, based on the total weight of the dispersion, the solids comprising synthetic resin particles of various sizes, wherein the majority of the larger particles are a least twice as large as the majority of the smaller particles and wherein the majority of the larger particles have a size of from 0.5 to 3 µm and the majority of the smaller particles have a size of from 0.1 to 1 µm, and

(b) from 30 to 120 parts by weight of a plasticiser/soft resin mixture, with from 1 to 20 parts by weight of soft resin per part by weight of plasticiser.

2. Adhesive for floor coverings according to claim 1, characterised in that, in the aqueous dispersion,

(a) the portion having the larger polymer particles constitutes from 50 to 80% by weight, based on the total weight of solids in the dispersion.

3. Adhesive for floor coverings according to claim 1 or 2, characterised in that from 0 to 20% by weight of the plasticiser/soft resin mixture is replaced by organic solvents.

4. Adhesive for floor coverings according to one of claims 1 to 3, characterised in that from 0 to 41% by weight of the plasticiser/soft resin mixture is replaced by hard resin.

5. Adhesive for floor coverings according to claim 4, characterised in that from 0 to 35% by weight of the plasticiser/soft resin mixture is replaced by hard resin.

6. Process for the manufacture of the adhesive for floor coverings according to claim 1, characterised in that the polymer dispersion (a) is mixed in a mixing apparatus with the plasticiser/soft resin mixture (b) in a weight ratio of from 1 : 0.3 to 1 : 12.

7. Use of the adhesive according to claim 1 for laying floor coverings consisting of textile-like or foamed materials.

**Revendications**

1. Colle pour revêtement de sol, caractérisée en ce qu'elle contient:

a) 100 parties en poids d'une dispersion aqueuse de polymère, ayant une teneur en matière sèche de 30 à 70% du poids total de la dispersion, la matière sèche étant constituée par des particules de matière plastique de différentes grosseurs, le plus grand nombre des grosses particules étant au moins deux fois aussi grosses que le plus grand nombre des petites particules et le plus grand nombre des grosses particules présentant une grosseur de 0,5 à 3 microns et le plus grand nombre des petites particules une grosseur de 0,1 à 1 micron,

b) 30 à 120 parties en poids d'un mélange de plastifiant et de résines souples, avec pour 1 partie en poids du plastifiant présence de 1 à 20 parties en poids des résines souples.

2. Colle pour revêtement de sol selon la revendication 1, caractérisée en ce que, dans la dispersion aqueuse de matière plastique, la proportion des grosses particules de polymère représente 50 à 80% en poids, par rapport au poids total de la matière sèche présente dans la dispersion.

3. Colle pour revêtement de sol selon la revendication 1 ou 2, caractérisée en ce que 0 à 20% en poids du mélange de plastifiant et de résines souples sont remplacés par du solvant organique.

4. Colle pour revêtement de sol selon l'une des revendications 1 à 3, caractérisée en ce que 0 à 41% du poids du mélange de plastifiant et de résines souples sont remplacés par de la résine dure.

5. Colle pour revêtement de sol selon la revendication 4, caractérisée en ce que 0 à 35% en poids du mélange de plastifiant et de résines souples sont remplacés par de la résine dure.

6. Procédé pour produire la colle pour revêtement de sol selon la revendication 1, caractérisé en ce qu'on mélange la dispersion de polymère a) avec le mélange (b) de plastifiant et de résines souples, selon un rapport de mélange de 1 : 0,3 à 1 : 12, dans un mélangeur.

7. Application de la colle selon la revendication 1 à la pose de revêtements de sol en des matières analogues à des textiles ou en des mousses.